# EUROPEAN PATENT APPLICATION

(11) **EP 4 672 134 A1**
(43) Date of publication of application: **31.12.2025**
(21) Application number: 25171686.6
(22) Date of filing: 22.04.2025
(51) Int. Cl.: G06T 5/50, G06T 7/00, G06T 7/11, G06T 7/30

(54) **MEDICAL IMAGE DISPLAY METHOD AND ELECTRONIC DEVICE**

(30) Priority: 27.06.2024 CN 202410847611
(71) Applicant: InnoLux Corporation, Jhunan Town Miao li 35053 (TW)
(72) Inventor: LIN, Cheng-Wu, 35053 Jhunan Town, Miaoli County (TW); WU, Shao-Chun, 35053 Jhunan Town, Miaoli County (TW); LIOU, Hao-Yu, 35053 Jhunan Town, Miaoli County (TW); WENG, Ruey-Jer, 35053 Jhunan Town, Miaoli County (TW)
(74) Representative: Becker, Eberhard

(57) **Abstract**

Disclosed are a medical image display method and an electronic device (100). The medical image display method includes the following steps: receiving a plurality of medical reference images corresponding to a plurality of image sources in different formats; performing image co-registration and image segmentation based on the medical reference images to generate at least one co-registered image mask; performing image overlay according to the at least one co-registered image mask and at least one of the medical reference images to generate an overlay image (730, 821); and displaying a medical image (710, 810, 830) according to the overlay image (730, 821).

## Description

### BACKGROUND

### Field of the Disclosure

The present disclosure relates to a display technology, and in particular, to a medical image display method and an electronic device.

### Description of Related Art

Conventional medical image display methods can only display a single source of medical images, such as computed tomography scans or magnetic resonance imaging (MRI). In other words, due to limitations of conventional medical image display methods, medical personnel are currently unable to effectively evaluate the imaging results of multiple medical images at the same time.

### SUMMARY OF THE DISCLOSURE

The present disclosure is directed to a medical image display method and an electronic device that may combine and display the content of a plurality of medical images.

According to an embodiment of the present disclosure, a medical image display method includes the following steps: receiving a plurality of medical reference images corresponding to a plurality of image sources in different formats; performing image co-registration and image segmentation based on the plurality of medical reference images to generate at least one co-registered image mask; performing an image overlay according to the at least one co-registered image mask and at least one of the plurality of medical reference images to generate an overlay image; and displaying a medical image according to the overlay image.

According to an embodiment of the present disclosure, an electronic device includes a display and a storage device. The storage device is configured to store at least one image segmentation model. The processor is coupled to the display and the storage device, and is configured to receive a plurality of medical reference images corresponding to a plurality of image sources in different formats. The processor performs image co-registration and image segmentation based on the plurality of medical reference images to generate at least one co-registered image mask, and performs an image overlay based on the at least one co-registered image mask and at least one of the plurality of medical reference images to generate an overlay image. The processor displays the medical image on the display based on the overlay image.

Based on the above, the medical image display method and electronic device of the present disclosure may merge the partial image contents of a plurality of medical reference images corresponding to a plurality of image sources in different formats to simultaneously display the medical images with content from a plurality of image sources.

The present disclosure may be understood by referring to the following detailed description and combined with the accompanying drawings. It should be noted that, in order to make it easy for readers to understand and for the simplicity of the drawings, many of the drawings in the present disclosure only show a part of the display device, and specific components in the drawings are not drawn to actual scale. In addition, the number and size of each component in the drawings are only for illustration and are not intended to limit the scope of the present disclosure.

### BRIEF DESCRIPTION OF THE DRAWINGS

FIG. 1 is a schematic diagram of an electronic device according to an embodiment of the present disclosure.
FIG. 2 is a flow chart of a medical image display method according to an embodiment of the present disclosure.
FIG. 3 is a flow chart of image co-registration and image segmentation according to an embodiment of the present disclosure.
FIG. 4 is a flow chart of image co-registration and image segmentation according to another embodiment of the present disclosure.
FIG. 5 is a flow chart of generating an image mask according to an embodiment of the present disclosure.
FIG. 6 is a flow chart of generating an image mask according to another embodiment of the present disclosure.
FIG. 7 is a schematic diagram of an image overlay according to an embodiment of the present disclosure.
FIG. 8 is a schematic diagram of an image overlay according to another embodiment of the present disclosure.
FIG. 9 is a flow chart of a medical image display method according to an embodiment of the present disclosure.

### DESCRIPTION OF EMBODIMENTS

In the description of the disclosure and the appended claims, certain terms will be used to refer to specific elements. Persons skilled in the art would understand that display device manufacturers may refer to the same elements under different names. This disclosure does not intend to distinguish between elements that have the same functions but different names. In the following description and appended claims, the words "have" and "include" are open-ended words, so they should be interpreted to mean "including but not limited to...".

In some embodiments of the disclosure, regarding the words such as "connect", "interconnected", etc. referring to bonding and connection, unless specifically defined, these words mean that two structures are in direct contact or two structures are not in direct (indirect) contact, and other structures are provided to be disposed between the two structures. The word for joining and connecting may also include the case where both structures are movable or both structures are fixed. Furthermore, the term "coupling" includes any direct or indirect electrical connection.

The ordinal numbers used in the specification and claims, such as "first", "second", etc., are used to modify an element. They do not themselves imply and represent that the element(s) have any previous ordinal number, and also do not represent the order of one element and another element, or the order of manufacturing methods. The use of these ordinal numbers is to clearly distinguish an element with a certain name from another element with the same name. The claims and the specification may not use the same terms, and accordingly, the first component in the specification may be the second component in the claims. It should be understood that the following embodiments may replace, reorganize, and mix the technical features in several different embodiments to complete other embodiments without departing from the spirit of the disclosure.

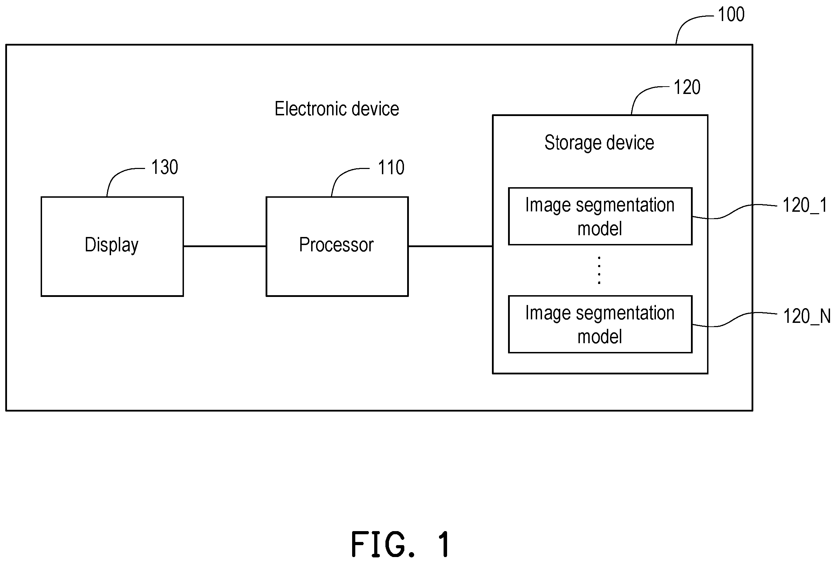

FIG. 1 is a schematic diagram of an electronic device according to an embodiment of the present disclosure. Referring to FIG. 1, the electronic device 100 includes a processor 110, a storage device 120 and a display 130. The processor 110 is coupled to the storage device 120 and the display 130. In this embodiment, the storage device 120 is configured to store a plurality of image segmentation models 121_1 to 121_N, wherein N is a positive integer. In an embodiment, the storage device 120 may only store one image segmentation model. In this embodiment, the electronic device 100 may be an image display device with image display and processing functions. In an embodiment, the processor 110 and the storage device 120 may also be integrated in an external host device, and the display 130 may be integrated in the display device. The external host device and the display device may be connected in a wired or wireless manner. In addition, in an embodiment, the electronic device 100 may also be a naked-eye three-dimensional image display device with a three-dimensional image display function.

In this embodiment, the processor 110 may, for example, include a central processing unit (CPU), or other programmable general-purpose or specific-purpose microprocessor or a digital signal processor (DSP), a graphics processing unit (GPU), an application specific integrated circuit (ASIC), a programmable logic device (PLD), and other similar processing circuits or a combination of these devices. In this embodiment, the storage device 120 may include a memory and/or a database. The storage device 120 may be, for example, a non-volatile memory (NVM). The storage device 120 may store relevant images, masks, models, programs, modules, systems or algorithms used to implement various embodiments of the present disclosure to be accessed and executed by the processor 110 to implement various functions and operations described in the embodiments of the present disclosure.

In this embodiment, the display 130 may include, for example, a liquid crystal and a light-emitting diode. The light-emitting diode may include, for example, an organic light-emitting diode (OLED), a mini LED, a micro LED or a quantum dot (QD) light-emitting diode (which may be QLED, QDLED), fluorescence, phosphor or other suitable materials, and the materials may be arranged and combined freely, but are not limited thereto.

In an embodiment, the electronic device 100 may further include a sensor, and the sensor is coupled to the processor 110. The sensor may be an eye tracker, an image sensor, an IR sensor, etc., and is configured to track the position of the human eye. The sensor may directly transmit the corresponding coordinate information to the processor 110, or provide a visible light image or an infrared image to the processor 110, so that the processor 110 may analyze the visible light image or infrared image to obtain the corresponding eye coordinates of the human eye.

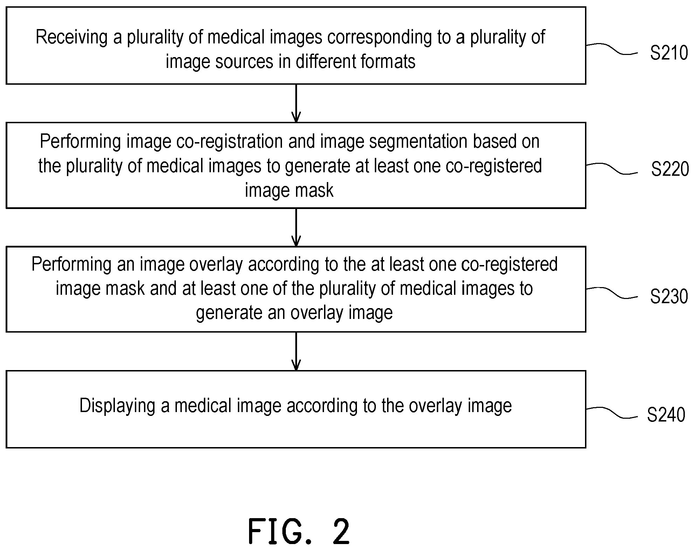

FIG. 2 is a flow chart of a medical image display method according to an embodiment of the present disclosure. Referring to FIG. 1 and FIG. 2, the electronic device 100 may perform the following steps S210 to S240. In step S210, the processor 110 receives a plurality of medical images corresponding to a plurality of image sources in different formats. In this embodiment, the plurality of medical images may include, for example, magnetic resonance imaging with enhanced T1-weighted sequence (T1C) medical images, magnetic resonance imaging fluid-attenuated inversion recovery (T2 FLAIR) sequence medical images, time of flight magnetic resonance venography (TOF MRV) medical images and diffusion weighted imaging (DWI) medical images, but the disclosure is not limited thereto. In this embodiment, each of the plurality of medical images may be volume data composed of multiple layers of two-dimensional medical image data, but the disclosure is not limited thereto. In an embodiment, the volume data may be data of the corresponding radiation absorption value of each voxel of the three-dimensional image created by spatially combining multi-layered two-dimensional medical images. In another embodiment, each of the plurality of medical images may be a single-layered two-dimensional medical image.

In step S220, the processor 110 performs image co-registration and image segmentation based on the plurality of medical images to generate at least one co-registered image mask. In this embodiment, the processor 110 may first perform image co-registration and then perform image segmentation. Alternatively, in an embodiment, the processor 110 may first perform image segmentation and then perform image co-registration.

In this embodiment, the processor 110 may perform image co-registration by first determining a reference image, and then adjusting the image resolution of the medical image or image mask to be co-registered to be the same as the image resolution of the reference image. In this regard, if the image resolution of the medical image or image mask to be co-registered is lower than the image resolution of the reference image, the processor 110 uses interpolation to calculate pixel values to increase the image resolution of the medical image or the image mask to be co-registered. In contrast, if the image resolution of the medical image or image mask to be co-registered is higher than the image resolution of the reference image, the processor 110 directly reduces the image resolution of the medical image or image mask to be co-registered. Then, the processor 110 may align (co-register) the image position of the medical image or image mask to be co-registered with the reference image according to the coordinate transformation function (or coordinate transformation matrix). The processor 110 may evaluate the transformed medical image or image mask and the reference image according to a cost function, and adjust the coordinate transformation function in an iterative manner so that a coordinate transformation function corresponding to the minimum cost function may be obtained. In this way, the processor 110 may effectively co-register the medical image or image mask to the reference image.

In this embodiment, the processor 110 performs image segmentation by inputting the medical image into one of the image segmentation models 121_1 to 121_N. In this embodiment, the image segmentation models 121_1 to 121_N may include, for example, an image segmentation model of a brain tumor, an image segmentation model of a cerebral artery, an image segmentation model of a cerebral vein, or an image segmentation model of nerve fibers, and the disclosure is not limited thereto. In this embodiment, the image segmentation models 121_1 to 121_N are artificial intelligence (AI) models respectively, and may be trained and established through machine learning (ML) methods for identifying and generating the image mask of specific tissues, organs, or structures in medical images.

In addition, the image mask may be, for example, a binary image, and is configured to display a portion of the image layer and hide other portions. For example, the transparency of the mask area corresponding to a portion of the display image layer may be, for example, 100% or a pixel value thereof is 1 (for retaining image content), and the transparency of the mask area corresponding to other portions of the display image layer may be, for example, 0% or a pixel value thereof is 0 (for hiding image content).

In step S230, the processor 110 may perform an image overlay according to the at least one image mask and at least one of the plurality of medical images to generate an overlay image. In this embodiment, the processor 110 may perform an image overlay according to an image mask and a medical reference image to generate the overlay image. Alternatively, the processor 110 may perform an image overlay according to the at least one image mask and a plurality of medical reference images to generate the overlay image. Alternatively, the processor 110 may perform an image overlay according to the plurality of image masks and a medical reference image to generate the overlay image. Alternatively, the processor 110 may perform an image overlay according to the plurality of image masks and the plurality of medical reference images to generate the overlay image. In this embodiment, the number of image masks and medical images and the overlaying method thereof may be determined according to actual applications or usage requirements.

In step S240, the display 130 may display the medical image according to the overlay image. The display 130 may simultaneously display medical images with content from a plurality of image sources according to the overlay image.

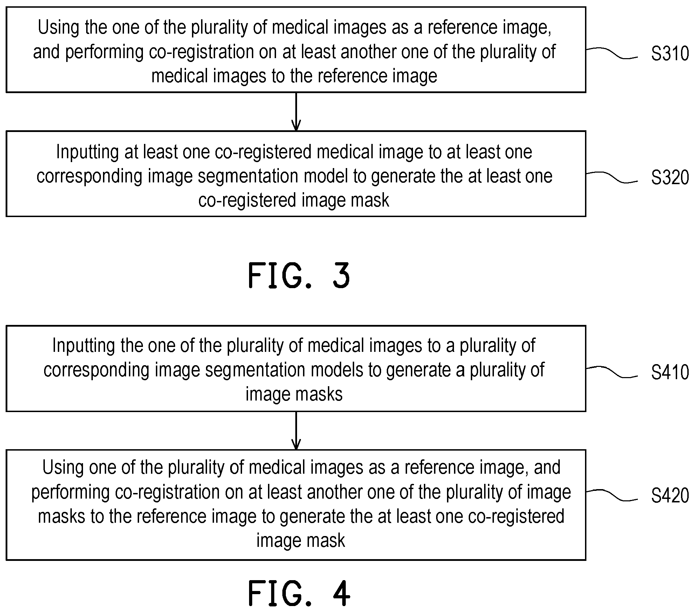

FIG. 3 is a flow chart of image co-registration and image segmentation according to an embodiment of the present disclosure. Referring to FIG. 1 to FIG. 3, for example, the processor 110 first performs image co-registration and then performs image segmentation. The processor 110 may perform the following steps S310 to S320. In step S310, the processor 110 may use one of the plurality of medical images as a reference image, and co-register at least another one of the plurality of medical images with the reference image. In this embodiment, the processor 110 may adjust the image resolution of at least another one of the plurality of medical reference images to be the same as the image resolution of the reference image, and the processor 110 may co-register at least another one of the plurality of medical reference images to the reference image. In step S320, the processor 110 may input the at least one co-registered medical image to at least one of the corresponding image segmentation models 121_1 to 121_N to generate at least one co-registered image mask.

FIG. 4 is a flow chart of image co-registration and image segmentation according to another embodiment of the present disclosure. Referring to FIG. 1 to FIG. 2 and FIG. 4, for example, the processor 110 first performs image segmentation and then performs image co-registration. The processor 110 may perform the following steps S410 to S420. In step S410, the processor 110 may input one of the plurality of medical reference images to a corresponding plurality of the image segmentation models 121_1 to 121_N to generate a plurality of image masks. In this embodiment, the processor 110 may adjust the image resolution of at least another one of the plurality of image masks to be the same as the image resolution of the reference image, and the processor 110 co-register at least another one of the plurality of image masks to the reference image. In step S420, the processor 110 may use one of the plurality of medical reference images as a reference image, and co-register at least another one of the plurality of image masks to the reference image to generate the at least one co-registered image mask.

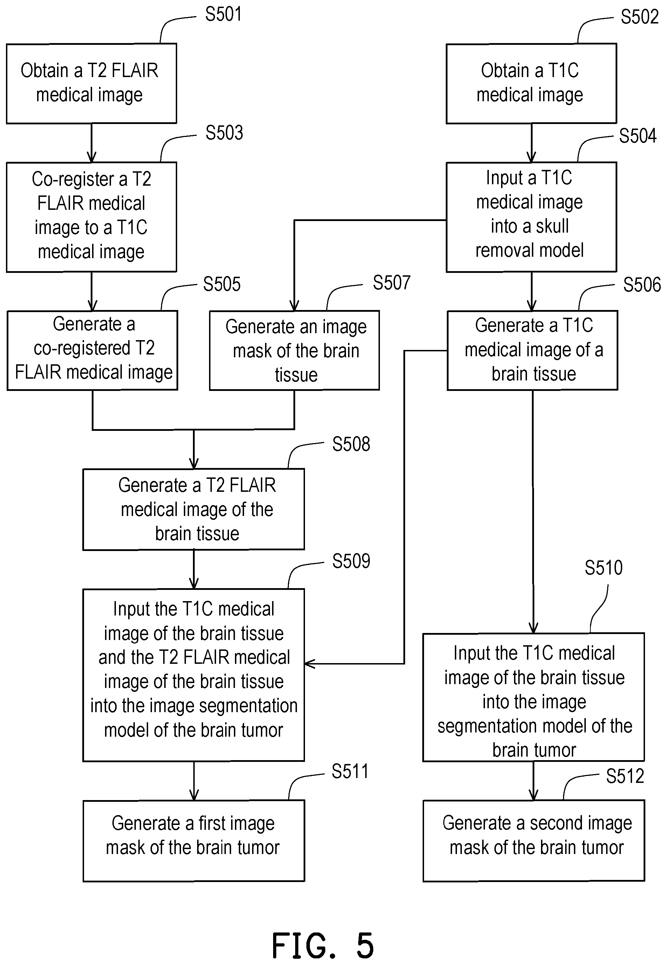

FIG. 5 is a flow chart of generating an image mask according to an embodiment of the present disclosure. Referring to FIG. 1 and FIG. 5, taking generation of image mask of a brain tumor as an example, the processor 110 may perform the following steps S501 to S512. It should be noted that this embodiment does not limit the execution order of steps S501 to S512. In step S501, the processor 110 may obtain a T2 FLAIR medical image. In step S502, the processor 110 may obtain a T1C medical image. In step S503, the processor 110 may co-register a T2 FLAIR medical image to a T1C medical image. In step S505, the processor 110 may generate a co-registered T2 FLAIR medical image. In step S504, the processor 110 may input a T1C medical image into a skull removal model. In step S506, the processor 110 may generate a T1C medical image of a brain tissue. In step S507, the processor 110 may generate an image mask of the brain tissue.

In step S508, the processor 110 may perform an image overlay on the co-registered T2 FLAIR medical image and the image mask of the brain tissue to generate a T2 FLAIR medical image of the brain tissue. In step S509, the processor 110 may input the T1C medical image of the brain tissue and the T2 FLAIR medical image of the brain tissue into the image segmentation model of the brain tumor. In step S511, the processor 110 may generate a first image mask of the brain tumor. In step S510, the processor 110 may input the T1C medical image of the brain tissue into the image segmentation model of the brain tumor. In step S512, the processor 110 may generate a second image mask of the brain tumor. Therefore, the processor 110 may first perform image co-registration and then perform image segmentation to generate the first image mask of the brain tumor.

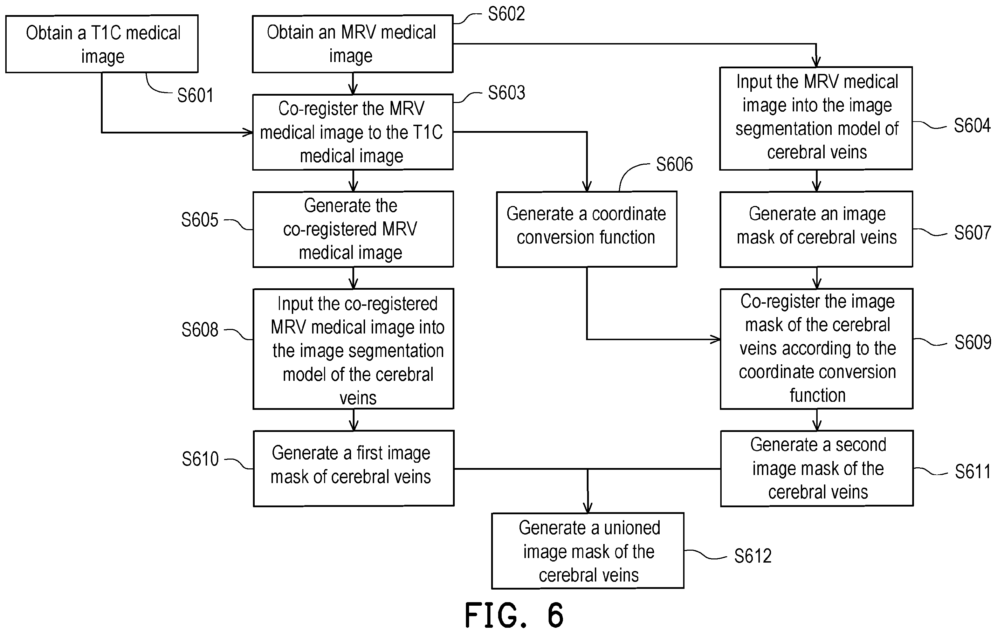

FIG. 6 is a flow chart of generating an image mask according to another embodiment of the present disclosure. Referring to FIG. 1 and FIG. 6, taking generating an image mask of cerebral veins as an example, the processor 110 may perform the following steps S601 to S612. It should be noted that this embodiment does not limit the execution order of steps S601 to S612. In step S601, the processor 110 may obtain a T1C medical image. In step S602, the processor 110 may obtain an MRV medical image. In step S603, the processor 110 may co-register the MRV medical image to the T1C medical image. In step S605, the processor 110 may generate the co-registered MRV medical image. In step S608, the processor 110 may input the co-registered MRV medical image into the image segmentation model of the cerebral veins. In step S610, the processor 110 may generate a first image mask of cerebral veins.

In step S606, the processor 110 may further generate a coordinate conversion function for co-registering the T1C medical image. In step S604, the processor 110 may input the MRV medical image into the image segmentation model of cerebral veins. In step S607, the processor 110 may generate an image mask of cerebral veins. In step S609, the processor 110 may co-register the image mask of the cerebral veins according to the coordinate conversion function. In step S611, the processor 110 may generate a second image mask of the cerebral veins. In step S612, the processor 110 may perform a union operation on the aforementioned first image mask and second image mask of the cerebral veins to generate a unioned image mask of the cerebral veins.

Therefore, the processor 110 may use different image processing processes to generate different image masks corresponding to the same target, and may perform a union operation on the different image masks to generate a unioned image mask of the cerebral veins.

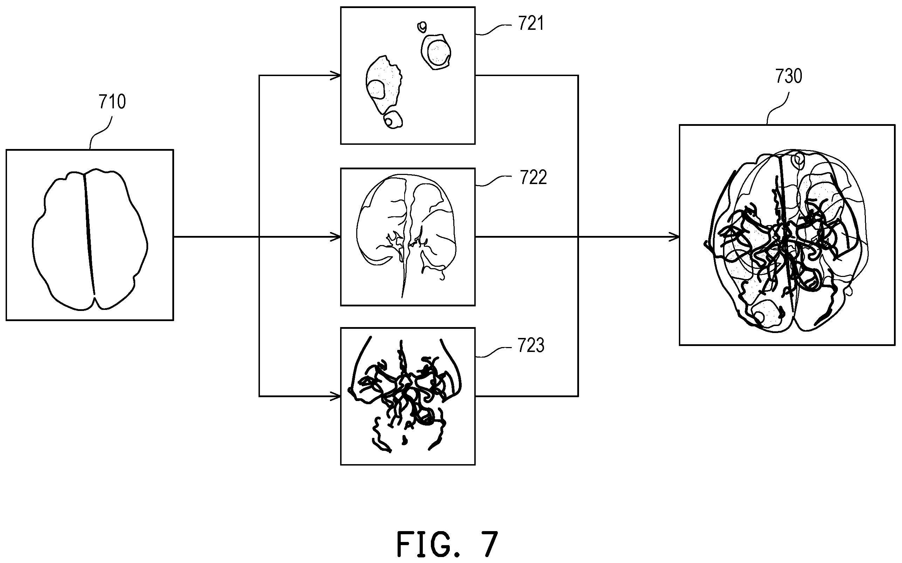

FIG. 7 is a schematic diagram of an image overlay according to an embodiment of the present disclosure. Referring to FIG. 1 and FIG. 7, taking the image overlay of a medical image and a plurality of image masks as an example, the processor 110 may, for example, receive a T1C medical image 710 of the brain, and, for example, generate an image mask 721 of a brain tumor, an image mask 722 of a cerebral vein, and an image mask 723 of a cerebral artery by using the image mask generation method described in each of the above embodiments. Furthermore, the image mask 721 of the brain tumor, the image mask 722 of the cerebral veins, and the image mask 723 of the cerebral arteries have been co-registered to the T1C medical image 710 of the brain. Therefore, the processor 110 may overlay the T1C medical image of the brain, the image mask 721 of the brain tumor, the image mask 722 of the cerebral veins, and the image mask 723 of the cerebral arteries to generate the overlay image 730. In this way, the electronic device 100 may simultaneously display the overlay image 730 with brain tumor information, cerebral vein information, and cerebral artery information through the display 130.

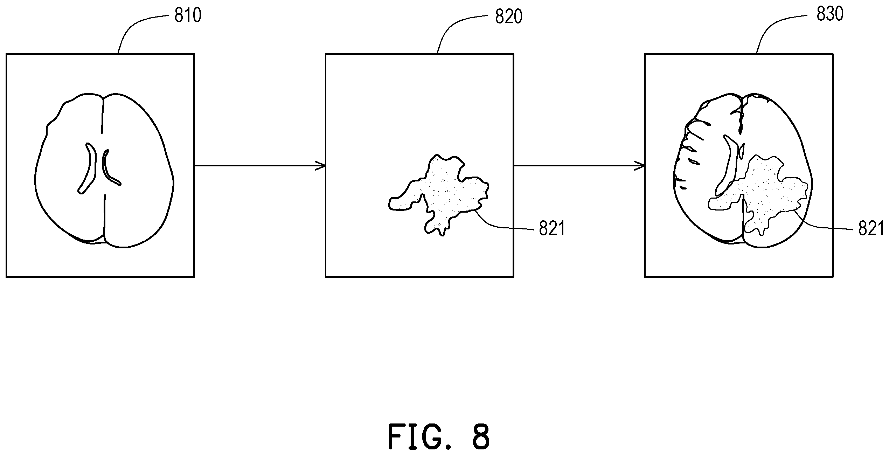

FIG. 8 is a schematic diagram of an image overlay according to another embodiment of the present disclosure. Referring to FIG. 1 and FIG. 8, taking the image overlay of a plurality of medical images and an image mask as an example, the processor 110 may, for example, receive a T2 FLAIR medical image 810 of the brain and a T1C medical image 830 of the brain, and, for example, generate the image mask 820 of a brain tumor by using the image mask generation method described in each of the above embodiments. Furthermore, the image mask 820 of the brain tumor and the T2 FLAIR medical image 810 of the brain have been co-registered with the T1C medical image 830 of the brain. The processor 110 may overlay the T2 FLAIR medical image 810 of the brain and the image mask 820 of the brain tumor (that is, remove some tissue images from the T2 FLAIR medical image 810) to generate an overlay image 821. Furthermore, the processor 110 may further overlay the overlay image 821 with the T1C medical image 830 of the brain. In this way, the electronic device 100 may display the T1C medical image 830 of the brain including the overlay image 821 through the display 130.

In addition, it should be noted that the overlay method for the T1C medical image 830 of the brain including the overlay image 821 may be performed by using the overlay image 821 to replace a pixel value of the corresponding image area (i.e., corresponding tissue) in the T1C medical image 830 of the brain. Alternatively, the processor 110 may set the transparency (e.g., adjusted to a transparency of 40%) of the overlay image 821 and the transparency (e.g., adjusted to a transparency of 60%) of the corresponding image area (i.e., corresponding tissue) in the T1C medical image 830 of the brain, so that the corresponding image area may simultaneously display the image content of T1C and the image content of the overlay image 821 (i.e., a portion of the tissue image in the T2 FLAIR medical image 810).

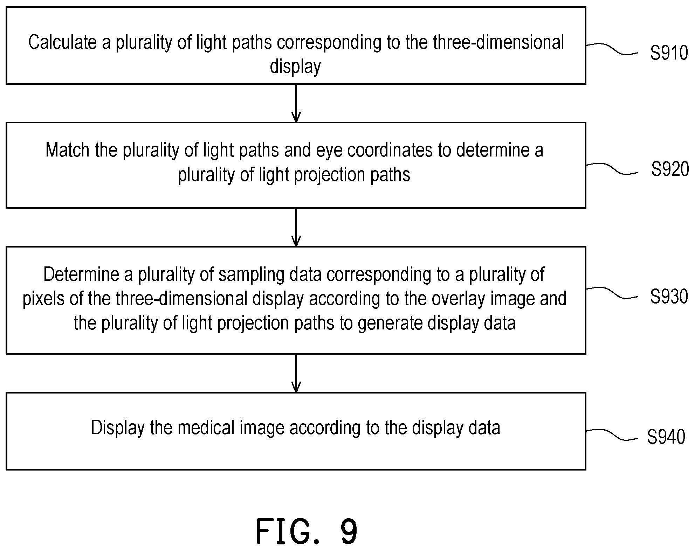

FIG. 9 is a flow chart of a medical image display method according to an embodiment of the present disclosure. Referring to FIG. 1 and FIG. 9, in an embodiment, the display 130 may be a naked-eye three-dimensional image display. The electronic device 100 may perform the following steps S910 to S940 to display the three-dimensional medical image. In this embodiment, the processor 110 may sense the positions of the viewer's eyes through the above-mentioned sensors to obtain corresponding eye coordinates. The processor 110 may transform the eye coordinates to a display coordinate system of display 130. In step S910, the processor 110 may calculate a plurality of light paths corresponding to the three-dimensional display (i.e., the display 130). In this embodiment, the processor 110 may calculate the light path of light emission of each pixel in the display 130.

In step S920, the processor 110 may match the plurality of light paths and eye coordinates to determine a plurality of light projection paths. In this embodiment, the processor 110 may co-register a plurality of pixels in the display 130 to the eye coordinates to determine the plurality of light projection paths, so that at least a portion of the pixels in the display 130 may emit images to the human eyes respectively along the light projection paths.

In step S930, the processor 110 may determine a plurality of sampling data corresponding to a plurality of pixels of the three-dimensional display according to the overlay image and the plurality of light projection paths to generate display data. In this embodiment, the processor 110 may separately calculate a plurality of values corresponding to a plurality of voxels that each light projection path passes through in the volume data of the overlay image, so as to generate a plurality of synthetic data corresponding to the plurality of pixels, and transform the plurality of synthetic data into display data.

In step S940, the processor 110 may display the medical image according to the display data. Therefore, the display 130 may simultaneously display three-dimensional medical images that incorporate content from a plurality of image sources through the display 130.

To sum up, the medical image display method and electronic device of the present disclosure may perform image co-registration and image segmentation on a plurality of medical reference images corresponding to a plurality of image sources in different formats to generate at least one co-registered image mask, and may perform an image overlay on the at least one co-registered image mask and the at least one medical reference image to generate an overlay image that may simultaneously display content from a plurality of image sources.

## Claims

1. A medical image display method, comprising:
receiving a plurality of medical reference images corresponding to a plurality of image sources in different formats;
performing image co-registration and image segmentation based on the plurality of medical reference images to generate at least one co-registered image mask;
performing an image overlay according to the at least one co-registered image mask and at least one of the plurality of medical reference images to generate an overlay image (730, 821); and
displaying the medical image (710, 810, 830) according to the overlay image (730, 821).

2. The medical image display method according to claim 1, wherein performing the image co-registration and the image segmentation based on the plurality of medical reference images comprises:
using the one of the plurality of medical reference images as a reference image, and performing co-registration on at least another one of the plurality of medical reference images to the reference image; and
inputting at least one co-registered medical reference image to at least one corresponding image segmentation model to generate the at least one co-registered image mask.

3. The medical image display method according to claim 2, wherein performing the co-registration on the at least another one of the plurality of medical reference images to the reference image comprises:
adjusting an image resolution of the at least another one of the plurality of medical reference images to be the same as an image resolution of the reference image; and
performing co-registration on the at least another one of the plurality of medical reference images to the reference image.

4. The medical image display method according to claim 1, wherein performing the image co-registration and the image segmentation based on the plurality of medical reference images comprises:
inputting the one of the plurality of medical reference images to a plurality of corresponding image segmentation models (121_1 to 121_N) to generate a plurality of image masks (721 to 723); and
using the one of the plurality of medical reference images as a reference image, and performing co-registration on at least another one of the plurality of image masks (721 to 723) to the reference image to generate the at least one co-registered image mask,
wherein performing the co-registration on the at least another one of the plurality of image masks (721 to 723) to the reference image comprises:
adjusting an image resolution of the at least another one of the plurality of image masks (721 to 723) to be the same as an image resolution of the reference image; and
performing the co-registration on the at least another one of the plurality of image masks (721 to 723) to the reference image.

5. The medical image display method according to claim 1, wherein generating the overlay image (730, 821) comprises:
performing the image overlay according to the at least one co-registered image mask and the plurality of medical reference images to generate the overlay image (730, 821).

6. The medical image display method according to claim 1, wherein generating the overlay image (730, 821) comprises:
performing the image overlay according to a plurality of the co-registered image masks and the one of the plurality of medical reference images to generate the overlay image (730, 821).

7. The medical image display method according to claim 1, wherein generating the overlay image (730, 821) comprises:
performing the image overlay according to a plurality of the co-registered image masks and the plurality of medical reference images to generate the overlay image (730, 821).

8. The medical image display method according to claim 1, wherein the overlay image (730, 821) is volume data, and displaying the medical image (710, 810, 830) comprises:
calculating a plurality of light paths corresponding to a three-dimensional display;
matching the plurality of light paths with eye coordinates to determine a plurality of light projection paths;
determining a plurality of sampling data corresponding to a plurality of pixels of the three-dimensional display according to the overlay image (730, 821) and the plurality of light projection paths to generate display data; and
displaying the medical image (710, 810, 830) according to the display data.

9. An electronic device (100), comprising:
a display (130); and
a storage device (120) configured to store at least one image segmentation model; and
a processor (110) coupled to the display (130) and the storage device (120), and configured to receive a plurality of medical reference images corresponding to a plurality of image sources in different formats,
wherein the processor (110) performs image co-registration and image segmentation based on the plurality of medical reference images to generate at least one co-registered image mask, and performs an image overlay based on the at least one co-registered image mask and at least one of the plurality of medical reference images to generate an overlay image (730, 821),
wherein the display (130) displays an image based on the overlay image (730, 821).

10. The electronic device (100) according to claim 9, wherein the processor (110) uses the one of the plurality of medical reference images as a reference image, and performs co-registration on at least another one of the plurality of medical reference images to the reference image,
wherein the processor (110) inputs at least one co-registered medical reference image to at least one corresponding image segmentation model to generate the at least one co-registered image mask,
wherein the processor (110) adjusts an image resolution of the at least another one of the plurality of medical reference images to be the same as an image resolution of the reference image,
wherein the processor (110) performs co-registration on the at least another one of the plurality of medical reference images to the reference image.

11. The electronic device (100) according to claim 9, wherein the processor (110) inputs the one of the plurality of medical reference images to a plurality of corresponding image segmentation models (121_1 to 121_N) to generate a plurality of image masks (721 to 723),
wherein the processor (110) uses the at least one of the plurality of medical reference images as a reference image, and performs co-registration on at least another one of the plurality of image masks (721 to 723) to the reference image to generate the at least one co-registered image mask,
wherein the processor (110) adjusts an image resolution of the at least another one of the plurality of image masks (721 to 723) to be the same as an image resolution of the reference image,
wherein the processor (110) performs the co-registration on the at least another one of the plurality of image masks (721 to 723) to the reference image.

12. The electronic device (100) according to claim 9, wherein the processor (110) performs the image overlay according to the at least one co-registered image mask and the plurality of medical reference images to generate the overlay image (730, 821).

13. The electronic device (100) according to claim 9, wherein the processor (110) performs the image overlay according to a plurality of the co-registered image masks and the one of the plurality of medical reference images to generate the overlay image (730, 821).

14. The electronic device (100) according to claim 9, wherein the processor (110) performs the image overlay according to a plurality of the co-registered image masks and the plurality of medical reference images to generate the overlay image (730, 821).

15. The electronic device (100) according to claim 9, wherein the processor (110) calculates a plurality of light paths corresponding to a three-dimensional display,
wherein the processor (110) matches the plurality of light paths with eye coordinates to determine a plurality of light projection paths,
wherein the processor (110) determines a plurality of sampling data corresponding to a plurality of pixels of the three-dimensional display according to the overlay image (730, 821) and the plurality of light projection paths to generate display data,
wherein the display (130) displays a medical image (710, 810, 830) according to the display data.
